# EUROPÄISCHE PATENTSCHRIFT

(11) **EP 0 410 975 B1**
(45) Veröffentlichungstag und Bekanntmachung des Hinweises auf die Patenterteilung: **08.09.1993**
(21) Anmeldenummer: 89903464.9
(22) Anmeldetag: 16.03.1989
(51) Int. Cl.: H02K 1/30

(54) **ELEKTRISCHE SYNCHRONMASCHINE MIT BLECHKETTENLÄUFER UND HOHLWELLE**
ELECTRIC SYNCHRONOUS MACHINE WITH SEGMENTAL RIM ROTOR AND HOLLOW SHAFT
MACHINE ELECTRIQUE SYNCHRONE AVEC ROTOR A JANTE FEUILLETEE ET ARBRE CREUX

(30) Priorität: 12.04.1988 DE 3812461
(43) Veröffentlichungstag der Anmeldung: 06.02.1991
(73) Patentinhaber: SIEMENS AKTIENGESELLSCHAFT, 80333 München (DE)
(72) Erfinder: SINGH, Bhupinder, D-1000 Berlin 28 (DE)
(86) Internationale Anmeldenummer: DE8900170
(87) Internationale Veröffentlichungsnummer: WO8910023

(56) Entgegenhaltungen:
- DE-C- 569 457
- DE-C- 588 226
- FR-A- 709 935

## Beschreibung

Die Erfindung bezieht sich auf eine elektrische Synchronmaschine, deren Läufer einen auf einem Nabenkörper angeordneten, aus Segmenten aufgebauten Ringkörper (Blechkette) aufweist, der die Erregerpole trägt, und bei welcher das Mittelteil des Nabenkörpers des Läufers beidseitig über in Längsrichtung der Welle verlaufende Befestigungsmittel am Flansch einer insbesondere vertikalen Hohlwelle angekuppelt ist.

Ein derartiger Aufbau einer elektrischen Synchronmaschine ist bei Maschinen großen Durchmessers, insbesondere bei Wasserkraftgeneratoren üblich und aus der DE-PS 28 31 123 bekannt. Die beidseitig am Nabenkörper des Läufers der elektrischen Maschine über Flansche befestigten, vertikal ausgerichteten Hohlwellen tragen das oben liegende Führungslager bzw. die unten angeordnete Antriebsmaschine, z. B. die Turbine, des Maschinensatzes. Mithin sind die Befestigungsmittel zwischen den Hohlwellen und dem hohlen Mittelteil des Nabenkörpers, der gleichzeitig die Läuferwelle bildet, erheblichen Beanspruchungen unterworfen. Diese entstehen durch die Fliehkraft, das Läufergewicht, durch Drehmoment und eventuell Wasserschub sowie durch Schrumpf- und andere Kräfte der Blechkette.

Letztere, insbesondere die beim Betrieb der elektrischen Synchronmaschine am Nabenkörper des Läufers auftretenden großen Dehnungsbeanspruchungen wirken sich bei der bekannten Synchronmaschine, bei welcher die axial außen liegenden Stirnwände des Mittelteils des Nabenkörpers unmittelbar den Befestigungsflansch für die Aufnahme der Befestigungsmittel am Flansch der Hohlwelle bilden, direkt auf die in Längsrichtung der Welle angeordneten Befestigungsmittel zur Kupplung aus, so daß diese zusätzlich zu der Beanspruchung durch die Drehmomentübertragung auch auf Biegung und Scherung beansprucht sind. Dies erfordert eine entsprechend hohe Dimensionierung aller Kupplungsteile einschließlich der Befestigungsmittel, damit die Betriebssicherheit gewährleistet ist.

Aus der FR-A 709 935 ist eine elektrische Maschine mit Jochkörper, Tragarmen und einem Nabenkörper bekannt, jedoch sind dort keine Maßnahmen zur Verbindung des Nabenkörpers mit einer Welle angegeben.

Aus der DE-C 569 457 ist einer Synchronmaschine bekannt, bei der ein Rotor mit einem Wellenzapfen über Bolzen verbunden ist. Zwischen Rotor und Wellenzapfen ist ein starrer Ring vorgesehen, der mittels Bolzen sowohl mit dem Rotor als auch mit dem Wellenzapfen verbunden ist. Die in dem Rotor entstehenden Biege- und Zugbeanspruchungen wirken sowohl auf die Bolzenverbindung zwischen dem Rotor und dem Ring, als auch, wegen der Starrheit des Ringes, auf die Bolzenverbindung zwischen dem Ring und dem Wellenzapfen.

Der Erfindung liegt die Aufgabe zugrunde, bei einer elektrischen Synchronmaschine mit Blechkettenläufer und Hohlwelle durch eine konstruktiv andere Gestaltung des Mittelteils des Nabenkörpers eine Entlastung der Kupplung nebst Befestigungsmittel zur Hohlwelle zu erreichen.

Zur Lösung dieser Aufgabe ist gemäß der Erfindung bei einer elektrischen Synchronmaschine der eingangs beschriebenen Art der Mittelteil des Nabenkörpers mit axial verlaufenden Rohransätzen versehen, die mit dem Mittelteil des Nabenkörpers ein einteiliges Bauteil bilden und die Flansche zur Aufnahme der Befestigungsmittel zur Hohlwelle tragen.

Durch diese Rohransätze, die auf einer oder auf beiden Seiten vorgesehen sein können, werden die Flansche zur Aufnahme der Befestigungsmittel zur Hohlwelle in axialer Richtung aus dem der Blechkette entsprechenden Bereich des Mittelteils des Nabenkörpers verlagert, so daß die am Nabenkörper auftretenden Dehnungsbeanspruchungen sich im wesentlichen nur in einer Biege- und Schubbeanspruchung der zusätzlichen axialen Rohransätze auswirken. Diese werden zum Großteil von den Rohransätzen durch Verformung aufgenommen, so daß sie nur noch in erheblich verminderter Intensität an den Befestigungsmitteln zur Hohlwelle selbst angreifen. Dadurch sind die Befestigungsmittel zwischen den Rohransätzen und der Hohlwelle in erster Linie nur noch durch das zu übertragende Drehmoment beansprucht, während die infolge der Dehnung der Blechkette des Läufers auftretenden Radialkräfte bzw. Scherbeanspruchungen wesentlich vermindert sind.

Diese Funktionstrennung bei der Aufnahme der Betriebsbeanspruchungen erlaubt eine wesentlich größere Sicherheit bei der Dimensionierung der Befestigungsmittel, die leichter zu rechnen ist. Durch das zwischengeschaltete Biegeglied, gegeben durch die axial verlaufenden Rohransätze, werden die während des Betriebes der Synchronmaschine weiterhin auftretenden Setzungserscheinungen an der Blechkette, die bei der bekannten unmittelbaren Befestigung der Hohlwelle an den axialen Stirnwänden des Nabenkörpers zu einer Verspannung der Befestigungsmittel der Kupplung führen würden, von der Kupplung ferngehalten, so daß die wiederholte Demontage der Kupplung zwischen dem Nabenkörper des Läufers und der Hohlwelle wesentlich vereinfacht ist.

Es ist zweckmäßig, die axial verlaufenden Rohransätze jeweils an der axialen Stirnwand des Mittelteils des Nabenkörpers anzuschweißen. Dadurch erleichtert sich die Fertigung, und man erhält einen für die Beanspruchungen wie ein einstückiges Bauteil wirkenden Nabenkörper.

Im Sinne einer Raumersparnis und einer Verbesserung der Zugänglichkeit kann es vorteilhaft sein, zumindest an einer Stirnseite des Mittelteils des Nabenkörpers den Flansch am Rohransatz ebenso wie den Flansch an der Hohlwelle radial nach innen gerichtet auszubilden, so daß die Befestigungsmittel an dieser Seite sich im Innern der Hohlwelle befinden.

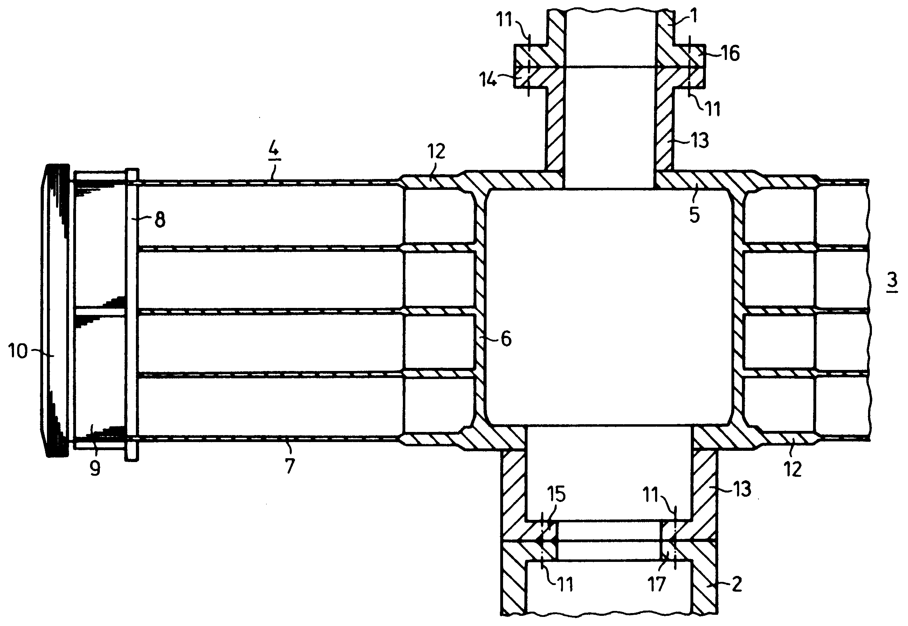

Im folgenden sei die Erfindung noch anhand des in der Figur dargestellten Ausführungsbeispiels näher erläutert. Die Figur zeigt, schematisch dargestellt, einen Teil eines Längsschnitts durch den Läufer einer gemäß der Erfindung ausgebildeten elektrischen Synchronmaschine.

Bei einem Maschinensatz eines Wasserkraftgenerator ist die vertikal angeordnete Welle des Maschinensatzes als Hohlwelle ausgebildet. Sie besteht aus einer oberen Hohlwelle 1, die das nicht dargestellte obere Führungslager trägt, und aus einer unteren Hohlwelle 2, welche die ebenfalls nicht dargestellte Turbine trägt. Zwischen beiden Hohlwellen 1 und 2 liegt der Läufer 3 der elektrischen Synchronmaschine, welche den Wasserkraftgenerator bildet. Dieser Läufer 3 hat einen hohl ausgebildeten Nabenkörper 4, dessen Mittelteil 5 mit seiner Innenwand 6 die hohle Läuferwelle bildet. Der Nabenkörper 4 weist außerdem am Mittelteil 5 befestigte Arme 7 auf, die radial außen mit einem Kopfbalken 8 abschließen. Auf diesen Kopfbalken 8 ist die Blechkette 9 aufgeschrumpft und in geeigneter, nicht dargestellter Weise in Umfangsrichtung geführt. Diese Blechkette 9 trägt die Erregerpole 10 der elektrischen Synchronmaschine.

Der Nabenkörper 4 der Synchronmaschine wird also über die Blechkette 9 neben dem Läufergewicht auch noch durch die Schrumpfkräfte der Blechkette 9 und während des Betriebes durch die Fliehkraft beansprucht. Diese Kräfte werden in den Mittelteil 5 eingeleitet. Um nun die in der Zeichnung nur durch Mittellinien angedeuteten, als Befestigungsmittel 11 dienenden Kupplungsbolzen, die in Längsrichtung der Welle des Maschinensatzes verlaufen, von den durch die während des Betriebes infolge der Fliehkraft auftretenden Dehnungsbeanspruchungen zu entlasten, sind jeweils an den in axialer Richtung außen liegenden Stirnwänden 12 des Mittelteils 5 seitliche, axial verlaufende Rohransätze 13 angeschweißt, die somit mit dem Mittelteil 5 belastungsmäßig einen einteiligen Bauteil bilden. Erst diese Rohransätze 13 weisen die zur Befestigung an den Hohlwellen 1, 2 dienenden Flansche 14 bzw. 15 auf. Zur besseren Raumausnutzung ist der Flansch 14 des oberen Rohransatzes 13 radial nach außen gerichtet, in gleicher Weise wie der Flansch 16 der oberen Hohlwelle 1, so daß sich bei dieser oberen Kupplung die Befestigungsmittel 11 außerhalb der Hohlwelle 1 bzw. des Rohransatzes 13 befinden. Dagegen hat die untere Hohlwelle 2, welche die Turbine trägt, einen größeren Innendurchmesser, so daß der Flansch 15 des unteren Rohransatzes 13 radial nach innen gerichtet ist, ebenso wie der entsprechende Flansch 17 der Hohlwelle 2. Bei der unteren Kupplung liegen somit die Befestigungsmittel 11 innerhalb der Hohlwelle 2 bzw. des entsprechenden Rohransatzes 13.

Durch diese besondere Gestaltung des Mittelteils 5 des Habenkörpers 4 mit den in axialer Richtung verlaufenden Rohransätzen 13, die erst ihrerseits die Flansche 14 bzw. 15 für die Kupplung mit den Hohlwellen 1, 2 tragen, sind die Kupplungsstellen zu den Hohlwellen in axialer Richtung aus dem direkt durch die Blechkette 9 beanspruchten Bereich des Nabenkörpers 4 herausgeführt. Die Rohransätze 13 werden somit durch die Dehnungsbeanspruchungen während des Betriebes der elektrischen Synchronmaschine auf Biegung und Schub beansprucht und nehmen durch ihre Verformung einen wesentlichen Teil dieser Beanspruchungen auf. Sie entlasten somit die Befestigungsmittel 11 an den Kupplungen zu den Hohlwellen 1, 2 des Maschinensatzes. Dadurch lassen sich die Beanspruchungen der Befestigungsmittel 11 leichter errechnen. Wegen der geringeren Kräfte können sie entsprechend kleiner dimensioniert werden. Außerdem werden sie durch das bei dem Betrieb der Synchronmaschine auftretende Setzen der Blechkette kaum verspannt, so daß sich die Kupplungen im Bedarfsfall leicht demontieren lassen.

## Patentansprüche

1. Elektrische Synchronmaschine, deren Läufer (3) einen auf einem Nabenkörper (4) angeordneten, aus Segmenten aufgebauten Ringkörper (Blechkette 9) aufweist, der die Erregerpole (10) trägt, und bei welcher das Mittelteil (5) des Nabenkörpers (4) des Läufers (3) beidseitig über in Längsrichtung der Welle verlaufende Befestigungsmittel (11) am Flansch (16, 17) einer insbesondere vertikalen Hohlwelle (1, 2) angekuppelt ist,
**dadurch gekennzeichnet,** daß der Mittelteil (5) des Nabenkörpers (4) mit axial verlaufenden Rohransätzen (13) versehen ist, die mit dem Mittelteil des Nabenkörpers (4) ein einteiliges Bauteil bilden und die Flansche (14, 15) zur Aufnahme der Befestigungsmittel (11) zur Hohlwelle (1, 2) tragen.

2. Elektrische Synchronmaschine nach Anspruch 1,
**dadurch gekennzeichnet,** daß die axial verlaufenden Rohransätze (13) jeweils an der axialen Stirnwand (12) des Mittelteils (5) des Nabenkörpers (4) angeschweißt sind.

3. Elektrische Synchronmaschine nach Anspruch 1 oder 2,
**dadurch gekennzeichnet,** daß zumindest an einer Stirnseite des Mittelteils (5) des Nabenkörpers (4) der Flansch (15) am Rohransatz (13) ebenso wie der Flansch (17) an der Hohlwelle (2) radial nach innen gerichtet ist.

## Claims

1. Electric synchronous machine whose rotor (3) has a segmented annular body (segmental rim 9) arranged on a spider body (4) which carries the exciter poles (10) and in which the centre portion (5) of the spider body (4) of the rotor (3) is coupled on both sides to a flange (16, 17) of a hollow shaft (1, 2), in particular a vertical one, via securing means (11) extending in the longitudinal direction of the shaft, characterised in that the centre portion (5) of the spider body (4) is provided with axially extending tube extensions (13) which form a one-piece component with the centre portion of the spider body (4) and which carry flanges (14, 15) for receiving the securing means (11) at the hollow shaft (1, 2).

2. Electric synchronous machine according to claim 1, characterised in that the axially extending tube extensions (13) are each welded to the axial end wall (12) of the centre portion (5) of the spider body (4).

3. Electric synchronous machine according to claim 1 or 2, characterised in that at least on one end of the centre portion (5) of the spider body (4) the flange (15) on the tube extension (13) is directed radially inwardly in the same way as the flange (17) on the hollow shaft (2).

## Revendications

1. Machine électrique synchrone, dont le rotor (3) comporte une pièce annulaire (jante feuilletée) (9) montée sur un moyeu (4), constituée de segments et portant les pôles excitateurs (10), et dans laquelle la partie centrale (5) du moyeu (4) du rotor (3) est accouplée, des deux côtés, par l'intermédiaire de moyens de fixation (11) qui s'étendent dans la direction longitudinale de l'arbre, à la bride (16, 17) d'un arbre creux (1, 2) notamment vertical, caractérisée par le fait que la partie centrale (5) du moyeu (4) est munie d'embouts tubulaires (13) axiaux, qui forment, avec la partie centrale du moyeu (4), un élément monobloc et qui portent des brides (14, 15) de réception des moyens de fixation (11) prévus pour l'arbre creux (1, 2).

2. Machine électrique synchrone suivant la revendication 1, caractérisée par le fait que les embouts tubulaires (13) axiaux sont soudés respectivement à la paroi frontale (12) axiale de la partie centrale (5) du moyeu (4).

3. Machine électrique synchrone suivant la revendication 1 ou 2, caractérisée par le fait qu'au moins sur une face frontale de la partie centrale (5) du moyeu (4), la bride (15) située sur l'embout tubulaire (13) ainsi que la bride (17) située sur l'arbre creux (2) sont dirigées radialement vers l'intérieur.
